# EUROPEAN PATENT SPECIFICATION

(11) **EP 0 973 409 B1**
(45) Date of publication and mention of the grant of the patent: **03.05.2006**
(21) Application number: 98910653.9
(22) Date of filing: 13.02.1998
(51) Int. Cl.: A23G 9/04, A23G 9/48

(54) **ICE CONFECTION WITH INCLUSIONS**
SPEISEEISKONFEKT MIT FÜLLUNGSSTÜCKEN
GLACES AVEC DES INCLUSIONS

(30) Priority: 28.02.1997 US 808114
(43) Date of publication of application: 26.01.2000
(73) Proprietor: Société des Produits Nestlé S.A., 1800 Vevey (CH)
(72) Inventor: MEZIANE, Janine, Aurora, OH 44202 (US)
(74) Representative: Elleby, Gudrun
(86) International application number: PCT/EP1998/000800
(87) International publication number: WO 1998/037770

(56) References cited:
- GB-A- 2 008 382
- GB-A- 2 052 241
- GB-A- 2 263 615
- US-A- 1 901 394
- US-A- 3 671 268
- PATENT ABSTRACTS OF JAPAN vol. 004, no. 151 (C-028), 23 October 1980 -& JP 55 096052 A (OOTA TOSHIYUKI;OTHERS: 01), 21 July 1980,
- PATENT ABSTRACTS OF JAPAN vol. 014, no. 492 (C-0773), 26 October 1990 -& JP 02 203752 A (KANEBO LTD), 13 August 1990, -& DATABASE WPI Derwent Publications Ltd., London, GB; AN 90-287538 XP002065970

## Description

### FIELD OF THE INVENTION

The present invention relates to an ice confection more particularly to an ice confection containing a plurality of inclusions within.

### BACKGROUND OF THE INVENTION

Water ice products are well known and are, in effect frozen, diluted and sweetened fruit juices which usually contain stabilisers such as gelatin or gums. They are very popular and they may come in various colours and flavours. They may be moulded in various shapes and are often supported on a stick. One commercially available moulded water ice product contains within a single relatively large fruit flavoured gum inclusion which is manually deposited in the mould before filling.

In order to be more attractive to consumers, it would be desirable to have a water ice product containing a plurality of gum or other inclusions within, possibly having a different colour or flavour to that of the water ice. We have found that the incorporation of a plurality of smaller gum inclusions may be achieved by automatically distributing the gum inclusions through a fruit feeder into the water ice mix: the method is therefore less labour intensive than manually depositing a single large gum inclusion into the water ice mix.

Ice compositions comprising inclusions are known.

GB 2 052 241 A discloses a method for manufacturing an ice cream containing small pieces dispersed therein. These pieces consist, in a particular embodiment, of a coloured water-gelatine mixture.

GB 2 008 382 A discloses an ice confection having at least a zone comprising a major proportion of gel beadlets and a minor proportion of an interstitial ice-containing phase.

GB 2 263 615 A discloses a composite frozen confection, shaped as a bar and comprising materials of different texture and taste, e.g. nut particles.

JP 55 096052 A discloses a moulded ice composition comprising fruit pieces mixed with ice cream and coated with chocolate.

JP 02 203752 A shows a moulded product in which fruit pieces, i.e. sarcocarps, are aligned in a frozen dessert mix.

US 3 671 268 A discloses an ice cream product having distributed throughout its bulk discrete pieces of a gelled fruit puree, e.g. a gelled strawberry puree comprising gelatin as a gelling agent.

### SUMMARY OF THE INVENTION

According to the present invention, there is provided an ice confection which is a water ice, a sorbet or a sherbet in the form of a moulded bar, which comprises 2 to 16 discrete gum inclusions having a volume of to 1 ml, wherein the said inclusions are distributed in an ice mix, each inclusion having a defined shape of a butterfly, a fly or a larva.

The present invention also provides a process for producing an ice confection as defined in present independent claim 8.

### DETAILED DESCRIPTION OF THE INVENTION

The ice confection is a moulded bar and it may, if desired, be supported by a stick. The weight of the bar may be, for instance, from 20 to 100g and preferably from 40 to 80g. [2.25oz=63.8g] . The ice confection is a water ice, a sorbet, or a sherbet. The flavour of the ice confection may be any conventional flavour used for an ice confection, for instance, orange, lemon, lime, grape, cherry, etc. The ice confection may be either a single ice confection with inclusions or it may be a shell and core product with the inclusions within the core. In the latter case, the shell thickness is preferably from 2mm to 4mm and the shell length is preferably from 20 to 50% of the total length of the ice confection.

The inclusions are gum inclusions. The number of inclusions within the ice confection may be preferably from 4 to 12. The maximum size of each inclusion is 1mℓ and is preferably less than 0.65mℓ. The especially preferred size of each inclusion is from 0.2 to 0.5mℓ. The inclusions within the claimed confection have a defined shape, of a butterfly, fly, larva shapes.

The gum of the gum inclusion is preferably gelatin but it may also be any other suitable gum such as carrageenan, xanthan gum, gum tragacanth or agar. Other ingredients of the gum inclusion may include corn syrup, sugar, citric acid, lactic acid, flavors, colors, mineral oil and carnuba wax, etc. The gum inclusions may be of various colours, e.g. orange, red, green and preferably the colour of the gum inclusion is different to the colour of the ice confection. The flavour of the gum inclusion may be, for instance, cherry, orange, grape or lime.

As mentioned above, the present application also provides a process for producing an ice confection which is a water ice, a sorbet or a sherbet, comprising inclusions,
characterized in that the process comprises
- preparing an ice mix,
- filling the ice mix into a mould,
- preparing gum inclusions of defined shape,
- chilling the gum inclusions to a temperature of from about -1 °C to -2° C,
- automatically distributing the chilled gum inclusions through a fruit feeder provided with a feeding screw into the ice mix within the mould;
after incorporation of the said inclusions, the ice confection is frozen and stored, whereby the incorporation is carried out at a temperature so that the gum inclusions stay distributed in the ice mix and no air pockets are formed during freezing of the product.

In the preparation of an ice confection containing a plurality of gum inclusions within, the gum inclusions may be chilled through a freezer preferably to a temperature from -1.2°C to -1.5°C before feeding through a fruit feeder into the ice confection mix in a mould.The temperature is such that the gums are enabled to stay suspended in the ice confection. If the temperature is too high, the gums soak and if the temperature is too low, the filling of the mould is ineffective due to the formation of air pockets. The fruit feeder is provided with a feed screw which avoids scratching the gum and also to prevent the gum inclusions sticking together which would cause clogging the pipes and filling nozzles. After the incorporation of the gum inclusions, the ice confection is frozen, e.g. in a freezing tunnel, a blast freezer or by means of liquid nitrogen, and stored, preferably at -25° to -35°C.

### EXAMPLE

The following Example further illustrates the present invention.

A water ice mix flavoured with a sweet intense orange flavour and colored orange with Color Pantone # 150U weighing 60.92g having a volume of 58.57ml is fed into a cylindrical mould having a length of 60mm at a temperature of -1.3°C. Eight gum inclusions each having a volume from 0.2 to 0.4mℓ are chilled through a freezer to -1.3°C and distributed through a fruit freezer by means of a screw into the water ice. The gum inclusions contain gelatin, corn syrup, sugar, citric acid, lactic acid, mineral oil and carnuba wax.and each is flavored with either lime, grape or wild cherry flavor and coloured ith either green, purple or red colour respectively.

The water ice is provided with a stick and frozen in a freezing tunnel to -30°C for storage.

## Claims

**1.** An ice confection which is a water ice, a sorbet or a sherbet in the form of a moulded bar, which comprises 2 to 16 discrete gum inclusions each having a volume of up to 1 mℓ,
wherein the said inclusions are distributed in an ice mix, each inclusion having a defined shape of a butterfly, a fly or a larva.

**2.** The ice confection according to claim 1, which is a shell and core product with the inclusions within the core.

**3.** The ice confection according to claim 2, wherein the thickness of the shell is preferably from 2 to 4 mm and the length of the shell is preferably 20 to 50 % of the total length of the ice confection.

**4.** The ice confection of claim 1, wherein the volume of each inclusion is from 0.2 to 0.5 mℓ.

**6.** The ice confection of claim 1, wherein the gum inclusions are based on gelatin and may comprise further ingredients which are selected from the group consisiting of corn syrup, sugar, citric acid, lactic acid, flavors, colours, mineral oil and cstnuba wax.

**7.** The ice confection of claim 1, wherein the colours of the gum inclusions are different to the colour of the ice confection.

**8.** A process for producing an ice confection which is a water ice, a sorbet or a sherbet, comprising inclusions, **characterized in that** the process comprises preparing an ice mix, filling the ice mix into a mould, preparing gum inclusions of a defined shape, chilling the gum inclusions to a temperature of from about -1° C to -2° C and automatically distributing the chilled gum inclusions through a fruit feeder provided with a feeding screw into the ice mix within the mould, and after incorporation of the said inclusions, the ice confection is frozen and stored, wherein the incorporation is carried out at a temperature so that the gum inclusions stay distributed in the ice mix and no air pockets are formed during freezing of the product.

**9.** The process of claim 8, wherein the gum inclusions are fed into the ice mix such mat each ice confection comprises from 2 to 16 of said inclusions of a volume of up to to 1 mℓ, preferably between 0.2 an 0.5 mℓ.

**10.** The process of claim 9, wherein the inclusions are in the shape of a butterfly, a fly or a larva.

## Patentansprüche

**1.** Ein Eiskonfekt, welches ein Wasser-Eis, ein Sorbet oder ein Sherbet in Form eines gegossenen/geformten Streifens ist, welcher 2 bis 16 diskrete Gummi-Einschlüsse umfasst, welche jeweils ein Volumen von bis zu 1ml aufweisen,
wobei diese Einschlüsse in einer Eis-Mischung verteilt sind, wobei jeder Einschluss eine definierte Form eines Schmetterlings, einer Fliege oder einer Larve aufweist.

**2.** Das Eiskonfekt gemäß Anspruch 1, welches ein Produkt mit Ummantelung und Kern ist, und die Einschlüsse innerhalb des Kerns aufweist.

**3.** Das Eiskonfekt gemäß Anspruch 2, wobei die Dicke der Ummantelung bevorzugt von 2 bis 4 mm beträgt, und die Länge der Ummantelung bevorzugt 20 bis 50 % von der Gesamtlänge des Eiskonfekts beträgt.

**4.** Das Eiskonfekt gemäß Anspruch 1, wobei das Volumen jedes Einschlusses von 0,2 bis 0,5 ml reicht.

**6.** Das Eiskonfekt gemäß Anspruch 1, wobei die Gummi-Einschlüsse auf Gelatine basieren, und weitere Ingredienzien umfassen können, welche aus der Gruppe ausgewählt sind, welche aus Korn/Mais-Sirup, Zucker, Zitronensäure, Milchsäure, Geschmackstoffen, Farben, Mineralöl und Carnauba-Wachs besteht.

**7.** Das Eiskonfekt gemäß Anspruch 1, wobei die Farben der Gummi-Einschlüsse von der Farbe des Eis-Konfekts abweichen.

**8.** Ein Verfahren zum Herstellen eines Eiskonfekts, welches ein Wasser-Eis, ein Sorbet oder ein Sherbet ist, welches Einschlüsse umfasst, **dadurch gekennzeichnet, dass** das Verfahren umfasst: Präparieren einer Eismischung, Füllen der Eismischung in eine Form, Präparieren von Gummi-Einschlüssen von einer definierter Form, Abkühlen der Gummi-Einschlüsse auf eine Temperatur von ungefähr -1°C bis -2°C und automatisches Verteilen der abgekühlten Gummi-Einschlüsse, mittels einer mit einer Zuführ-Schraube versehenen Frucht-ZuführVorrichtung, in der Eismischung innerhalb der Form, und wobei nach Einarbeitung der genannten Einschlüsse das Eiskonfekt gefroren und gelagert wird, wobei das Einschließen bei einer derartigen Temperatur ausgeführt wird, dass die Gummi-Einschlüsse in der Eismischung verteilt bleiben, und während des Frierens des Produktes keine LuftTaschen gebildet werden.

**9.** Das Verfahren gemäß Anspruch 8, wobei die Gummi-Einschlüsse in die Eismischung derart zugeführt werden, dass jedes Eiskonfekt von 2 bis 16 dieser Einschlüsse von einem Volumen von bis zu 1 ml, bevorzugt zwischen 0,2 und 0,5 ml, umfasst.

**10.** Das Verfahren gemäß Anspruch 9, wobei die Einschlüsse die Form eines Schmetterlings, einer Fliege oder einer Larve annehmen.

## Revendications

**1.** Confiserie glacée qui est une glace à l'eau ou un sorbet sous la forme d'une barre moulée, comprenant de 2 à 16 inclusions discrètes de gomme ayant chacune un volume allant jusqu'à 1 ml,
dans laquelle lesdites inclusions sont distribuées dans un mélange à base de glace, chaque inclusion ayant une forme définie de papillon, de mouche ou de larve.

**2.** Confiserie glacée selon la revendication 1, qui est un produit de type à enveloppe et coeur avec les inclusions à l'intérieur du coeur.

**3.** Confiserie glacée selon la revendication 2, dans laquelle l'épaisseur de l'enveloppe est de préférence de 2 à 4 mm et la longueur de l'enveloppe est de préférence de 20 à 50 % de la longueur totale de la confiserie glacée.

**4.** Confiserie glacée selon la revendication 1, dans laquelle le volume de chaque inclusion est de 0,2 à 0,5 ml.

**6.** Confiserie glacée selon la revendication 1, dans laquelle les inclusions de gomme sont à base de gélatine et peuvent comprendre des ingrédients supplémentaires qui sont choisis dans l'ensemble constitué de sirop de mais, de sucre, d'acide citrique, d'acide lactique, d'arômes, de colorants, d'huile minérale et de cire de carnauba.

**7.** Confiserie glacée selon la revendication 1, dans laquelle les couleurs des inclusions de gomme sont différentes de la couleur de la confiserie glacée.

**8.** Procédé de préparation d'une confiserie glacée qui est une glace à l'eau ou un sorbet, comprenant des inclusions, **caractérisé en ce que** ledit procédé comprend les étapes consistant à préparer un mélange à base de glace, introduire le mélange à base de glace dans un moule, préparer des inclusions de gomme ayant une forme définie, refroidir les inclusions de gomme à une température d'environ -1°C à -2°C et distribuer automatiquement les inclusions de gomme refroidies au moyen d'un doseur de fruit pourvu d'une vis d'amenée dans le mélange à base de glace à l'intérieur du moule, et après l'incorporation desdites inclusions, on congèle la confiserie glacée et on la stocke, procédé dans lequel on effectue l'incorporation à une température telle que les inclusions de gomme restent distribuées dans le mélange à base de glace et que des poches d'air ne se forment pas pendant la congélation du produit.

**9.** Procédé selon la revendication 8, dans lequel les inclusions de gomme sont amenées dans le mélange glacé de façon telle que chaque confiserie glacée comprend de 2 à 16 desdites inclusions ayant un volume allant jusqu'à 1 ml, de préférence compris entre 0,2 et 0,5 ml.

**10.** Procédé selon la revendication 9, dans lequel les inclusions ont la forme d'un papillon, d'une mouche ou d'une larve.
